# EUROPÄISCHE PATENTANMELDUNG

(11) **EP 3 766 724 A1**
(43) Veröffentlichungstag der Anmeldung: **20.01.2021**
(21) Anmeldenummer: 20180990.2
(22) Anmeldetag: 19.06.2020
(51) Int. Cl.: B60L 50/53, B60L 53/30, B60L 15/20, B60L 58/13, B60L 53/62, B60L 3/12

(54) **FAHRZEUG UND VERFAHREN ZUM BETREIBEN EINES FAHRZEUGS**

(30) Priorität: 18.07.2019 DE 102019210645
(71) Anmelder: Siemens Mobility GmbH, 81739 München (DE)
(72) Erfinder: Probst, Sebastian, 90408 Nürnberg (DE); Hassler, Stefan, 91281 Kirchenthumbach (DE)

(57) **Zusammenfassung**

Die Erfindung bezieht sich unter anderem auf ein Fahrzeug (10), insbesondere Schienenfahrzeug, mit mindestens einem Stromabnehmer (11) zur Aufnahme externer elektrischer Energie und mindestens einem internen Energiespeicher (12), der gespeicherte Energie zum Fahren in nichtelektrifizierten Strecken zur Verfügung stellen kann.

Erfindungsgemäß ist vorgesehen, dass das Fahrzeug (10) eine Prognoseeinrichtung aufweist, die auf der Basis von Streckendaten eines nächsten Streckenabschnitts, der sich bis zum nächsten Fahrziel erstreckt, einen Fahrenergiewert (dE) berechnet, der die zum Durchfahren eines oder mehrerer nichtelektrifizierter Unterabschnitte des nächsten Streckenabschnitts nötige Fahrenergie angibt, und das Fahrzeug eine mit der Prognoseeinrichtung verbundene Ladesteuerungseinrichtung aufweist, die unter Heranziehung des Ladestatus des internen Energiespeichers (12) vor dem Befahren des Streckenabschnitts und dem Fahrenergiewert (dE) der Prognoseeinrichtung die noch zu ladende Energiemenge berechnet sowie eine Ladestrategie (LST) ermittelt, gemäß derer der Energiespeicher vor dem Befahren des nächsten Streckenabschnitts und/oder während des Befahrens eines oder mehrerer elektrifizierter Unterabschnitte des nächsten Streckenabschnitts geladen werden soll, damit der Energiespeicher (10) zum Fahrtbeginn die Fahrenergie oder zumindest die Fahrenergie aufweist.

## Beschreibung

Die Erfindung bezieht sich auf Fahrzeuge, insbesondere Schienenfahrzeuge, mit mindestens einem Stromabnehmer zur Aufnahme externer elektrischer Energie und mindestens einem internen Energiespeicher, der gespeicherte Energie zum Fahren in nichtelektrifizierten Strecken zur Verfügung stellen kann.

Der Erfindung liegt die Aufgabe zugrunde, ein Fahrzeug anzugeben, bei dem ein Laden des internen Energiespeichers besonders schonend möglich ist.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass das Fahrzeug eine Prognoseeinrichtung aufweist, die auf der Basis von Streckendaten eines nächsten Streckenabschnitts, der sich bis zu einem nächsten Fahrziel erstreckt, einen Fahrenergiewert berechnet, der die zum Durchfahren eines oder mehrerer nichtelektrifizierter Unterabschnitte des nächsten Streckenabschnitts nötige Fahrenergie angibt, und das Fahrzeug eine mit der Prognoseeinrichtung verbundene Ladesteuerungseinrichtung aufweist, die unter Heranziehung des Ladestatus des internen Energiespeichers vor dem Befahren des Streckenabschnitts und dem Fahrenergiewert der Prognoseeinrichtung die noch zu ladende Energiemenge berechnet sowie eine Ladestrategie ermittelt, gemäß derer der Energiespeicher vor dem Befahren des nächsten Streckenabschnitts und/oder während des Befahrens eines oder mehrerer elektrifizierter Unterabschnitte des nächsten Streckenabschnitts geladen werden soll, damit der Energiespeicher zum Fahrtbeginn die Fahrenergie oder zumindest die Fahrenergie aufweist.

Ein wesentlicher Vorteil des erfindungsgemäßen Fahrzeugs ist darin zu sehen, dass durch die erfindungsgemäß vorgesehene Prognoseeinrichtung und die erfindungsgemäß mit dieser in Verbindung stehende Ladesteuerungseinrichtung eine optimale Ladestrategie ermittelt werden kann, beispielsweise mit dem Ziel, den internen Energiespeicher stets nur so weit zu laden, dass der jeweils nächstliegende Streckenabschnitt durchfahren werden kann. Unnötige Schnellladevorgänge, die zu einer unnötigen vorzeitigen Alterung des Energiespeichers führen können, lassen sich somit vermeiden.

Vorteilhaft ist es, wenn die Ladesteuerungseinrichtung den Ladestrom mit Blick auf eine maximale Lebensdauer des Energiespeichers und unter Berücksichtigung der zur Verfügung stehenden Ladezeit vor dem Befahren des nächsten Streckenabschnitts und/oder unter Berücksichtigung der zur Verfügung stehenden Ladezeiten während des Befahrens des oder der elektrifizierten Unterabschnitte des nächsten Streckenabschnitts minimal wählt.

Die Prognoseeinrichtung errechnet den Fahrenergiewert vorzugsweise auf der Basis eines vorgegebenen einzuhaltenden Fahrplans, dem Ist-Zustand und dem Energieverbrauch des Fahrzeugs, Wetterprognosedaten und/oder Ergebnissen von Fahrspielrechnungen für den nächsten Streckenabschnitt.

Besonders vorteilhaft ist es, wenn die Prognoseeinrichtung den Fahrenergiewert berechnet auf der Basis einer von ihr ermittelten Fahrstrategie, die die Fahrweise in dem nächsten Streckenabschnitt festlegt. Die Fahrstrategie ermittelt die Prognoseeinrichtung vorzugsweise auf der Basis des vorgegebenen einzuhaltenden Fahrplans, dem Ist-Zustand und dem Energieverbrauch des Fahrzeugs, Wetterprognosedaten und/oder Ergebnissen von Fahrspielrechnungen.

Die Prognoseeinrichtung ermittelt die Fahrstrategie bevorzugt mit dem Ziel, einen optimalen Ladevorgang, insbesondere energiesparenden, verschleißarmen und/oder lebensdauerschonenden Ladevorgang zu ermöglichen.

Bei einer vorteilhaften Ausgestaltung des Fahrzeugs steht die Prognoseeinrichtung mit einer Fahrzeugsteuereinrichtung in Verbindung oder bildet einen Bestandteil einer Fahrzeugsteuereinrichtung, die das Fahrzeug auf der Basis der von der Prognoseeinrichtung ermittelten Fahrstrategie steuert.

Alternativ oder zusätzlich kann in vorteilhafter Weise vorgesehen sein, dass die Prognoseeinrichtung mit einer Fahrzeugassistenzeinrichtung in Verbindung steht oder einen Bestandteil einer Fahrzeugassistenzeinrichtung bildet, die einem Fahrzeugführer des Fahrzeugs auf der Basis der von der Prognoseeinrichtung ermittelten Fahrstrategie Fahrzeugsteuerdaten akustisch und/oder visuell anzeigt, anhand derer der Fahrzeugführer das Fahrzeug unter Einhaltung der Prognose der Prognoseeinrichtung steuern kann.

Die Prognoseeinrichtung berücksichtigt vorzugsweise einen, mehrere oder alle der nachfolgenden Bedingungen, Aspekte, Ziele oder Algorithmen:
- Fahrplan,
- Streckendaten, insbesondere Daten bezüglich der Elektrifizierung und Einspeiseleistung von Netz und/oder Ladestation, bezüglich Streckengradienten, bezüglich Kurvenradien, bezüglich Haltestellung, bezüglich Kilometrierung, bezüglich Geschwindigkeitsbegrenzungen und/oder bezüglich Streckensignalen,
- Modellierungsparameter des Fahrzeugs, insbesondere die maximale Leistungsaufnahme,
- Modellierung des Energiespeichers,
- Modellierung eines oder mehrerer Zwischenkreise,
- Modellierung des elektrischen Antriebssystems des Fahrzeugs,
- Modellierung von Verlustparametern,
- Ist-Zustand von Fahrzeugkomponenten, insbesondere der Batterie oder Ladezustände,
- Temperaturen,
- Spannungen,
- Ströme,
- Kühlwassertemperatur,
- voraussichtliche Fahrzeit im elektrifizierten Abschnitt,
- Standzeit an Ladestation,
- Traktionsleistung als Funktion der Zeit,
- Traktionsenergieverbrauch,
- HBU (Hilfsbetriebeumrichter)/Bordnetz-Verbrauch,
- minimaler Zielladezustand, um den nächsten nicht elektrifizierten Abschnitt zu überwinden (insbesondere aus Reichweitenprognose),
- Optimierungsalgorithmus, der basierend auf der Modellierung von Live-Daten, Rand- und Nebenbedingungen, und Prognosedaten das optimale Ladeprofil gemäß einer Kostenfunktion für die Batterie berechnet.

Die Ladestrategie wird vorzugsweise derart ermittelt, dass der Energiespeicher die Fahrenergie erhält, die zum Durchfahren des nächsten Streckenabschnitts nötig ist, zuzüglich einer Sicherheitsmarge. Die Sicherheitsmarge beträgt mit Blick auf ein speicherschonendes Laden vorzugsweise maximal 10% des errechneten Fahrenergiewerts.

Bei einer besonders bevorzugten Ausführungsvariante ist vorgesehen, dass das Fahrzeug ein Schienenfahrzeug ist, dem ein Fahrplan vorgegeben ist, der das Befahren des jeweils nächsten Schienenstreckenabschnitts zeitlich festlegt, und die Prognoseeinrichtung die Ladestrategie und die Fahrstrategie unter Berücksichtigung des einzuhaltenden Fahrplans ermittelt.

Bei einer anderen als besonders bevorzugten Ausführungsvariante ist vorgesehen, dass das Fahrzeug ein Bus des öffentlichen Nahverkehrs ist, dem ein Fahrplan vorgegeben ist, der das Befahren des jeweils nächsten Streckenabschnitts zeitlich festlegt, und die Prognoseeinrichtung die Ladestrategie und die Fahrstrategie unter Berücksichtigung des einzuhaltenden Fahrplans ermittelt.

Die Erfindung bezieht sich darüber hinaus auf ein Verfahren zum Betreiben eines Fahrzeugs, insbesondere Schienenfahrzeugs, das einen Stromabnehmer zur Aufnahme externer elektrischer Energie und einen internen Energiespeicher aufweist, der gespeicherte Energie zum Fahren in nichtelektrifizierten Streckenabschnitten zur Verfügung stellen kann.

Erfindungsgemäß ist bezüglich eines solchen Verfahrens vorgesehen, dass auf der Basis von Streckendaten eines nächsten Streckenabschnitts, der sich bis zu einem nächsten Fahrziel erstreckt, ein Fahrenergiewert berechnet wird, der die zum Durchfahren eines oder mehrerer nichtelektrifizierter Unterabschnitte des nächsten Streckenabschnitts nötige Fahrenergie angibt, und unter Heranziehung des Ladestatus des Energiespeichers vor dem Befahren des Streckenabschnitts und dem Fahrenergiewert der Prognoseeinrichtung die zu ladende Energiemenge berechnet sowie eine Ladestrategie ermittelt wird, gemäß derer der Energiespeicher vor dem Befahren des Streckenabschnitts und/oder während des Befahrens des oder der elektrifizierten Unterabschnitte in dem nächsten Streckenabschnitt geladen werden soll, damit der Energiespeicher zum Fahrtbeginn die nötige Fahrenergie oder zumindest die nötige Fahrenergie aufweist.

Bezüglich der Vorteile des erfindungsgemäßen Verfahrens sei auf die obigen Erläuterungen im Zusammenhang mit dem erfindungsgemäßen Fahrzeug verwiesen.

Die Erfindung wird nachfolgend anhand von Ausführungsbeispielen näher erläutert; dabei zeigen beispielhaft
- Figur 1: ein Ausführungsbeispiel für ein erfindungsgemäßes Fahrzeug, das mit einer Prognoseeinrichtung und einer Ladesteuerungseinrichtung ausgestattet ist,
- Figur 2: ein Ausführungsbeispiel für ein erfindungsgemäßes Fahrzeug, bei dem eine Prognoseeinrichtung zusätzlich mit einer Fahrzeugassistenzeinrichtung in Verbindung steht,
- Figur 3: ein Ausführungsbeispiel für ein erfindungsgemäßes Fahrzeug, bei dem eine Prognoseeinrichtung zusätzlich mit einer Fahrzeugsteuereinrichtung in Verbindung steht,
- Figur 4: ein Ausführungsbeispiel für ein erfindungsgemäßes Fahrzeug, bei dem eine Prognoseeinrichtung sowohl mit einer Fahrzeugsteuereinrichtung als auch mit einer Fahrzeugassistenzeinrichtung in Verbindung steht,
- Figur 5: ein Ausführungsbeispiel für ein erfindungsgemäßes Fahrzeug, bei dem eine Prognoseeinrichtung zwei oder mehrere mögliche Ladezeiten und Energiemengenangaben ermittelt und diese an eine nachgeordnete Ladesteuerungseinrichtung zur Auswahl einer geeigneten Ladestrategie überträgt, und
- Figur 6: ein Ausführungsbeispiel für ein erfindungsgemäßes Fahrzeug, bei dem ein interner Energiespeicher des Fahrzeugs mehrere Speichermodule aufweist, die zur Symmetrierung des Ladezustands individuell von der Ladesteuerungseinrichtung geladen werden.

In den Figuren werden der Übersicht halber für identische oder vergleichbare Komponenten stets dieselben Bezugszeichen verwendet.

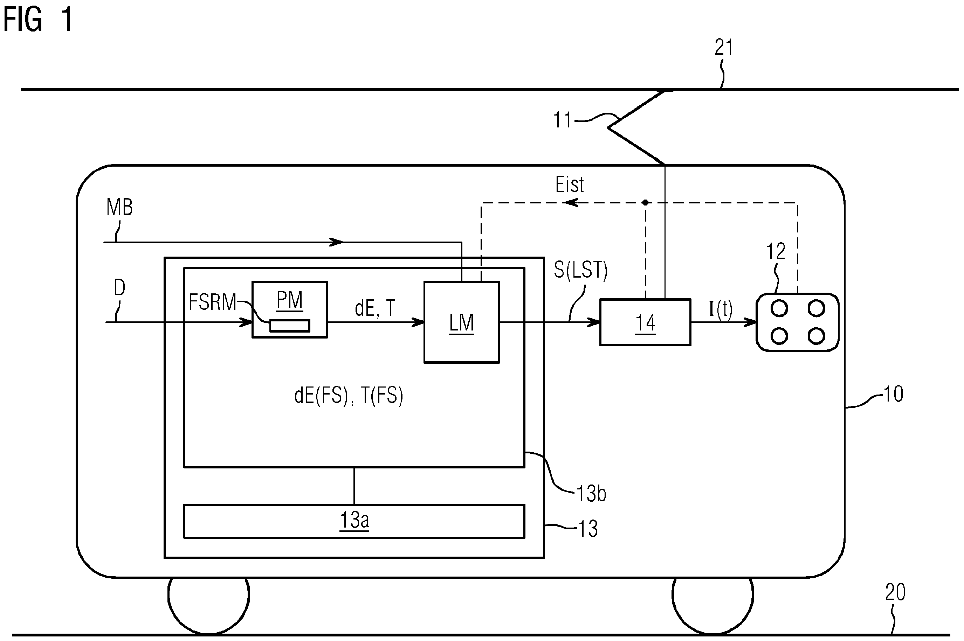

Die Figur 1 zeigt ein elektrisch betriebenes oder zumindest auch elektrisch antreibbares Fahrzeug 10, das über einen oder mehrere Stromabnehmer 11 mit einer Stromschiene oder einem Fahrdraht 21 einer in der Figur 1 nur angedeuteten Strecke 20 in Verbindung steht. Die Figur 1 zeigt das Fahrzeug 10 während eines Fahrzeughalts beispielsweise in einem Bahnhof.

Ein interner Energiespeicher 12 des Fahrzeugs 10 kann über den Stromabnehmer 11 elektrische Energie erhalten und aufgeladen werden. Die Steuerung des Ladevorgangs erfolgt mittels einer Rechenanlage 13, die über ein Ladegerät 14 mit dem internen Energiespeicher 12 in Verbindung steht bzw. verbindbar ist.

Die Rechenanlage 13 weist eine Recheneinrichtung 13a und einen Speicher 13b auf, in dem eine Vielzahl an Programmmodulen abgespeichert sind, die bei Ausführung durch die Recheneinrichtung 13a die Arbeitsweise der Rechenanlage 13 bestimmen.

In dem Speicher 13b ist unter anderem ein Prognosemodul PM abgespeichert, das bei Ausführung durch die Recheneinrichtung 13a eine Prognoseeinrichtung bildet. Wie weiter unten noch näher im Detail erläutert wird, ist die Prognoseeinrichtung dazu ausgebildet, eine Fahrstrategie FS zum Durchfahren des jeweils nächsten Streckenabschnitts zu ermitteln und die zum Durchqueren eines oder mehrerer nichtelektrifizierter Unterabschnitte des nächsten Streckenabschnitts nötige Fahrenergie in Form eines Fahrenergiewertes dE zu errechnen.

In dem Speicher 13b ist darüber hinaus ein Ladestrategiemodul LM abgespeichert, das bei Ausführung durch die Recheneinrichtung 13a eine Ladesteuerungseinrichtung bildet, die das Ladegerät 14 zum Laden des internen Energiespeichers 12 mittels eines Steuersignals S ansteuert.

Der interne Energiespeicher 12 steht mit einem oder mehreren elektrischen Antrieben des Fahrzeugs 10 in Verbindung, die in der Figur 1 aus Gründen der Übersicht nicht näher dargestellt sind und von dem internen Energiespeicher 12 zum Durchfahren nichtelektrifizierter Unterabschnitte der Strecke 20 mit Fahrenergie versorgt werden können.

Zum Aufladen des internen Energiespeichers 12 arbeiten das Prognosemodul PM und das Ladestrategiemodul LM bzw. die dadurch gebildete Prognoseeinrichtung und die dadurch gebildete Ladesteuerungseinrichtung vorzugsweise wie folgt:
Auf der Basis eingangsseitiger Eingangsdaten D ermittelt das Prognosemodul PM eine geeignete Fahrstrategie FS und den dazu korrespondierenden Fahrenergiewert dE, der die zum Durchfahren eines oder mehrerer nichtelektrifizierter Unterabschnitte des jeweils nächsten Streckenabschnitts nötige Fahrenergie angibt. Um die entsprechende Berechnung des Fahrenergiewertes dE zu ermöglichen, umfassen die Eingangsdaten D u. a. Streckendaten des nächsten Streckenabschnittes, der sich bis zu dem jeweils nächsten Fahrziel erstreckt. Bei der Berechnung des Fahrenergiewerts dE kann das Prognosemodul PM ein mögliches weiteres Laden oder Nachladen während des Befahrens elektrifizierter Unterabschnitte des nächsten Streckenabschnitts berücksichtigen, sofern die Eingangsdaten D eine solche Lademöglichkeit während der Fahrt anzeigen.

Die Eingangsdaten D enthalten vorzugsweise auch Angaben bezüglich eines etwaig einzuhaltenden Fahrplans, des zu erwartenden Energieverbrauchs des Fahrzeugs 10, Wetterprognosen, der Elektrifizierung der Strecke und der zur Verfügung stehenden Einspeiseleistung des elektrischen Netzs, Streckenlängen, Streckengradienten, Kurvenradien, Geschwindigkeitsbegrenzungen sowie sonstiger Fahrzeugdaten, die den Energieverbrauch des Fahrzeugs 10 während der Fahrt beschreiben oder zumindest mittelbar betreffen.

Die Eingangsdaten D umfassen vorzugsweise auch Höhenangaben, die die Höhe des Fahrzeugs 10 beim Ladevorgang, also die geografische Höhe des Ladeorts bzw. des Fahrzeughalts während des Ladens, sowie die Höhe des Fahrzeugs 10 bei Erreichen des nächsten Fahrziels angeben. Die Höhendifferenz ist ein Maß für die Energie, die das Fahrzeug beim Durchfahren des nächsten Streckenabschnittes entweder erhält, wenn das Fahrziel niedriger liegt als der Ort des Ladevorgangs, oder zusätzlich aufwenden muss, wenn das Fahrziel höher liegt als der Ladeort.

Darüber hinaus enthalten die Eingangsdaten D, wie bereits angesprochen, vorzugsweise Angaben hinsichtlich der Möglichkeit eines weiteren Ladens oder Nachladens während des Befahrens des nächsten Streckenabschnitts.

Das Prognosemodul PM führt auf der Basis der Eingangsdaten D vorzugsweise Fahrspielrechnungen (beispielsweise mittels eines integrierten Fahrspielrechnungsmoduls FSRM) durch und ermittelt eine geeignete Fahrstrategie FS für den nächsten Streckenabschnitt. Darüber hinaus berechnet sie einen zu dieser geeigneten Fahrstrategie FS korrespondierenden Fahrenergiewert dE, der die Energie zum Erreichen des nächsten Fahrziels angibt und den der internen Energiespeicher 12 zumindest aufweisen müsste.

Der Fahrenergiewert dE und die zur Verfügung stehende Ladezeit T vor dem nächsten Fahrtbeginn (gemäß der Fahrstrategie FS) werden zum Ladestrategiemodul LM übermittelt.

Das Ladestrategiemodul LM legt in Abhängigkeit von einem den aktuellen Ladezustand des Energiespeichers 12 angebenden Ladezustandswert Eist, der von dem Ladegerät 14 und/oder direkt vom Energiespeicher 12 kommen kann, eingangsseitig anliegenden Modellparametern MB des Energiespeichers 12, dem Fahrenergiewert dE und der Ladezeit T eine Ladestrategie LST fest und steuert das nachgeschaltete Ladegerät 14 mittels eines Steuersignals S an. Entsprechend dem vorgegebenen Steuersignal S bzw. entsprechend der mit diesem übermittelten Ladestrategie LST wird das Ladegerät 14 einen Ladestrom I über der Zeit t in den internen Energiespeicher 12 einspeisen.

Die Ladestrategie LST bzw. das Steuersignal S(LST) werden vorzugsweise mit Blick auf eine maximale Lebensdauer des Energiespeichers 10 erstellt bzw. erzeugt; vorteilhaft ist es in der Regel, wenn das Ladestrategiemodul LM unter Berücksichtigung der zur Verfügung stehenden Ladezeit T einen minimalen Ladestrom wählt.

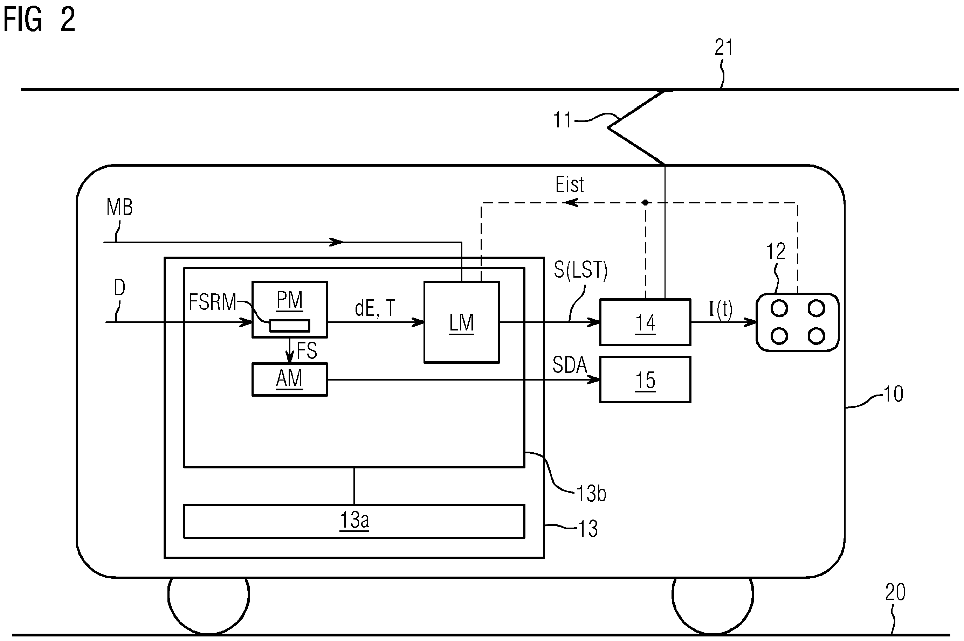

Die Figur 2 zeigt ein Ausführungsbeispiel für ein elektrisch angetriebenes bzw. antreibbares Fahrzeug 10, das mit einem Stromabnehmer 11, einem internen Energiespeicher 12, einer Recheneinrichtung 13 und einem Ladegerät 14 ausgestattet ist; bezüglich dieser Komponenten gelten die obigen Ausführungen im Zusammenhang mit der Figur 1 entsprechend.

Im Unterschied zu dem Ausführungsbeispiel gemäß Figur 1 ist das Fahrzeug 10 gemäß Figur 2 mit einer Fahrzeugassistenzeinrichtung 15 ausgestattet, die mit einem in dem Speicher 13b abgespeicherten Fahrzeugassistenzmodul AM in Verbindung steht bzw. von diesem bei Ausführung durch die Recheneinrichtung 13a angesteuert wird. Das Fahrzeugassistenzmodul AM erzeugt ausgangsseitig Steuerdaten SDA, die zur Steuerung des Fahrzeugassistenzsystems 15 dienen.

Das Fahrzeugassistenzmodul AM erzeugt die Steuerdaten SDA auf der Basis der von dem Prognosemodul PM ermittelten Fahrstrategie FS, und zwar dergestalt, dass der Fahrzeugführer das Fahrzeug 10 unter Einhaltung der von dem Prognosemodul PM erzeugten Fahrstrategie FS ansteuern kann. Beispielsweise kann die Fahrzeugassistenzeinrichtung 15 ausgangsseitig die Fahrzeugsteuerdaten SDA akustisch oder visuell anzeigen.

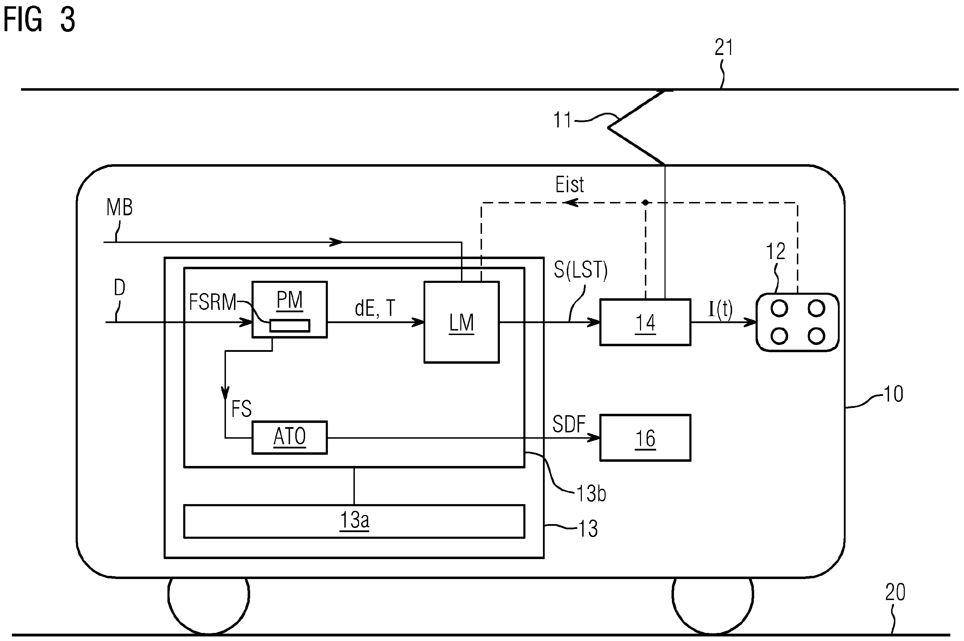

Die Figur 3 zeigt ein Ausführungsbeispiel für ein elektrisch angetriebenes bzw. antreibbares Fahrzeug 10, das mit einem Stromabnehmer 11, einem internen Energiespeicher 12, einer Recheneinrichtung 13 und einem Ladegerät 14 ausgestattet ist; bezüglich dieser Komponenten gelten die obigen Ausführungen im Zusammenhang mit der Figur 1 entsprechend.

Im Unterschied zu dem Ausführungsbeispiel gemäß Figur 1 ist das Fahrzeug 10 gemäß Figur 3 mit einer autonom oder führerlos arbeitenden Fahrzeugsteuereinrichtung 16 ausgestattet, die mit einem in dem Speicher 13b abgespeicherten Fahrzeugsteuermodul ATO in Verbindung steht bzw. von diesem bei Ausführung durch die Recheneinrichtung 13a angesteuert wird. Das Fahrzeugsteuermodul ATO erzeugt ausgangsseitig Steuerdaten SDF, die zur Steuerung der Fahrzeugsteuereinrichtung 16 dienen.

Das Fahrzeugsteuermodul ATO erzeugt die Steuerdaten SDF auf der Basis der von dem Prognosemodul PM ermittelten Fahrstrategie FS, und zwar dergestalt, dass die Fahrzeugsteuereinrichtung 16 das Fahrzeug unter Einhaltung der von dem Prognosemodul PM erzeugten Fahrstrategie FS ansteuern kann.

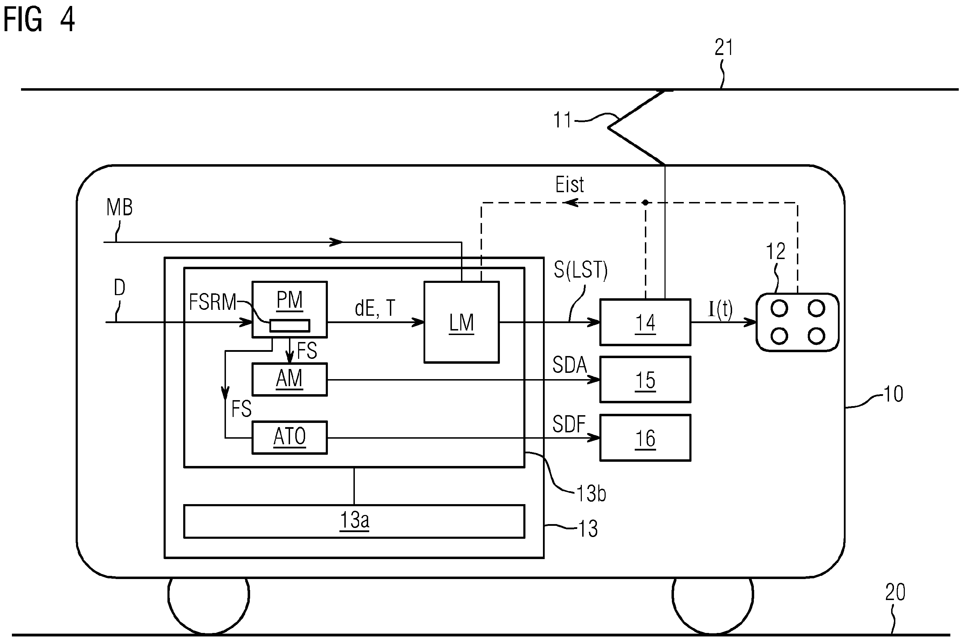

Die Figur 4 zeigt ein Ausführungsbeispiel für ein Fahrzeug, das mit einer Fahrzeugassistenzeinrichtung 15, einem Fahrzeugassistenzmodul AM, einer Fahrzeugsteuereinrichtung 16 und einem Fahrzeugsteuermodul ATO ausgestattet ist. Bezüglich des Fahrzeugassistenzsystems 15 und des Fahrzeugassistenzmoduls AM gelten die obigen Ausführungen im Zusammenhang mit der Figur 2 entsprechend; bezüglich der Fahrzeugsteuereinrichtung 16 und des Fahrzeugsteuermoduls ATO gelten die obigen Ausführungen im Zusammenhang mit der Figur 3 entsprechend.

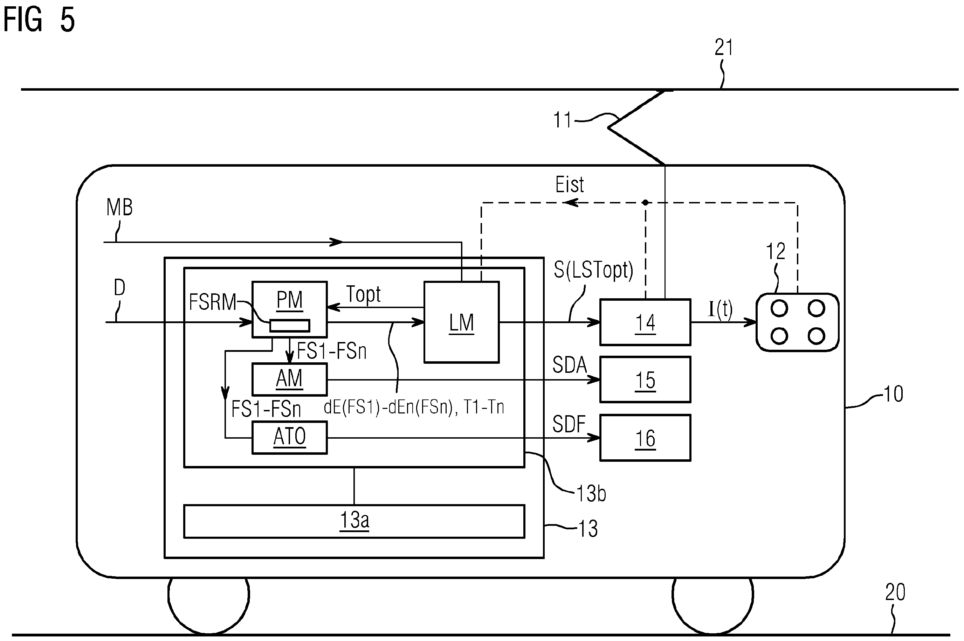

Die Figur 5 zeigt ein Ausführungsbeispiel für ein Fahrzeug 10, bei dem das Prognosemodul PM auf der Basis der Eingangsdaten nicht nur eine einzige Fahrstrategie FS, einen einzigen Fahrenergiewert dE und eine einzige zu dem Fahrenergiewert dE passende Ladezeit T ermittelt und zu dem Ladestrategiemodul LM übermittelt, sondern zwei oder mehr, vorzugsweise eine Vielzahl an Fahrstrategien FS1-FSn, und entsprechend viele korrespondierende Fahrenergiewerte dEl-dEn und korrespondierende Ladezeiten Tl-Tn. Beispielsweise kann die Prognoseeinrichtung PM berücksichtigen, dass sich die Abfahrt des Fahrzeugs 10 unter Einhaltung eines vorgegebenen Fahrplans zumindest geringfügig nach hinten verschieben lässt, wodurch die Ladezeit T für das Ladestrategiemodul LM bzw. das Ladegerät 14 erhöht werden könnte, wenn dies für den Ladevorgang vorteilhaft wäre. In der Regel wird eine Verschiebung der Abfahrzeit den jeweiligen Fahrenergiewert dE erhöhen, da eine höhere Fahrzeuggeschwindigkeit zum Erreichen des nächsten Fahrziels nötig sein dürfte. Unter Umständen kann eine Verschiebung der Abfahrtzeit nach hinten für die Ladestrategie LST trotz einer etwaigen Erhöhung des Fahrenergiewertes dE dennoch vorteilhaft sein, beispielsweise wenn durch die zusätzlich gewonnene Ladezeit aufgrund der Verschiebung der Abfahrtzeit nach hinten eine Ladung des elektrischen Energiespeichers speicherschonender als ohne Abfahrtsaufschub möglich wird, insbesondere, wenn dadurch eine Schnellladeprozedur verhindert wird.

Das Ladestrategiemodul LM wird auf der Basis der eingangsseitig vorliegenden Fahrenergiewerte dEl-dEn und der dazu korrespondierenden Ladezeiten Tl-Tn ermitteln, welches Paar an Fahrenergiewert dEopt und korrespondierender Ladezeit Topt eine optimale Ladestrategie LSTopt mit Blick auf ein energiesparendes verschleißarmes und lebensdauerschonendes Laden des internen Energiespeichers 12 verspricht.

Das Ladestrategiemodul LM wird auf der Basis der ermittelten optimalen Ladestrategie LSTopt anschließend das Ladegerät 14 ansteuern und die Ladung des internen Energiespeichers 12 veranlassen.

Darüber hinaus wird das Ladestrategiemodul LM die ausgewählte Ladezeit Topt an das Prognosemodul PM übermitteln, damit dieses die zu dieser Ladezeit Topt korrespondierende Abfahrtszeit ermitteln und an ein nachgeordnetes Fahrzeugassistenzmodul AM und/oder nachgeordnetes Fahrzeugsteuermodul ATO übertragen kann, sofern diese Module, wie in der Figur 5 gezeigt, vorhanden sind.

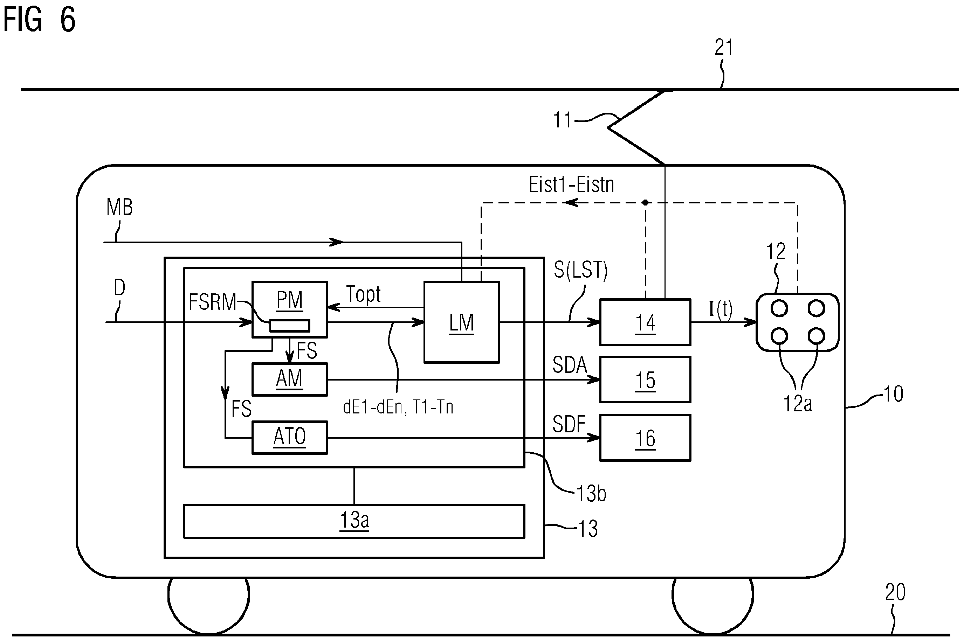

Die Figur 6 zeigt ein Ausführungsbeispiel für ein Fahrzeug 10, bei dem der interne Energiespeicher 12 mit einer Vielzahl an Speichermodulen 12a ausgestattet ist. Die von dem Ladestrategiemodul LM ermittelte Ladestrategie LST berücksichtigt anhand modulbezogener Ladezustandswerte Eistl-Eistp eventuell vorhandene Asymmetrien in den Ladezuständen der Speichermodule 12a und steuert das Ladegerät 14 vorzugsweise derart an, dass es zu einer Symmetrierung der Ladezustände in den einzelnen Speichermodulen 12a kommt. Im Übrigen gelten die obigen Ausführungen im Zusammenhang mit den Figuren 1 bis 5 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Fahrzeug / Energiespeicher
- 11: Stromabnehmer
- 12: interner Energiespeicher
- 12a: Speichermodul
- 13: Rechenanlage
- 13a: Recheneinrichtung
- 13b: Speicher
- 14: Ladegerät
- 15: Fahrzeugassistenzeinrichtung
- 16: Fahrzeugsteuereinrichtung
- 20: Strecke
- 21: Stromschiene / Fahrdraht

- AM: Fahrzeugassistenzmodul
- ATO: Fahrzeugsteuermodul
- dE: Fahrenergiewert
- D: Eingangsdaten
- Eist: Ladezustandswert
- Eistl-Eistp: modulbezogene Ladezustandswerte
- FS: Fahrstrategie
- FSRM: Fahrspielrechnungsmodul
- I: Ladestrom
- LM: Ladestrategiemodul
- LST: Ladestrategie
- LSTopt: optimale Ladestrategie
- MB: Modellparameter
- PM: Prognosemodul
- S: Steuersignal
- SDA: Steuerdaten
- SDF: Steuerdaten
- t: Zeit
- T: Ladezeit

## Patentansprüche

1. Fahrzeug (10), insbesondere Schienenfahrzeug, mit mindestens einem Stromabnehmer (11) zur Aufnahme externer elektrischer Energie und mindestens einem internen Energiespeicher (12), der gespeicherte Energie zum Fahren in nichtelektrifizierten Strecken zur Verfügung stellen kann,
**dadurch gekennzeichnet, dass**
- das Fahrzeug (10) eine Prognoseeinrichtung aufweist, die auf der Basis von Streckendaten eines nächsten Streckenabschnitts, der sich bis zum nächsten Fahrziel erstreckt, einen Fahrenergiewert (dE) berechnet, der die zum Durchfahren eines oder mehrerer nichtelektrifizierter Unterabschnitte des nächsten Streckenabschnitts nötige Fahrenergie angibt, und
- das Fahrzeug (10) eine mit der Prognoseeinrichtung verbundene Ladesteuerungseinrichtung aufweist, die unter Heranziehung des Ladestatus des internen Energiespeichers (12) vor dem Befahren des Streckenabschnitts und dem Fahrenergiewert (dE) der Prognoseeinrichtung die noch zu ladende Energiemenge berechnet sowie eine Ladestrategie (LST) ermittelt, gemäß derer der Energiespeicher (10) vor dem Befahren des nächsten Streckenabschnitts und/oder während des Befahrens eines oder mehrerer elektrifizierter Unterabschnitte des nächsten Streckenabschnitts geladen werden soll, damit der Energiespeicher (10) zum Fahrtbeginn die Fahrenergie oder zumindest die Fahrenergie aufweist.

2. Fahrzeug (10) nach Anspruch 1,
**dadurch gekennzeichnet, dass** die Ladesteuerungseinrichtung den Ladestrom (I) mit Blick auf eine maximale Lebensdauer des Energiespeichers (12) und unter Berücksichtigung der zur Verfügung stehenden Ladezeit (T) vor dem Befahren des nächsten Streckenabschnitts und/oder unter Berücksichtigung der zur Verfügung stehenden Ladezeiten (T) während des Befahrens des oder der elektrifizierten Unterabschnitte des nächsten Streckenabschnitts minimal wählt.

3. Fahrzeug (10) nach einem der voranstehenden Ansprüche, **dadurch gekennzeichnet, dass** die Prognoseeinrichtung den Fahrenergiewert (dE) errechnet auf der Basis eines vorgegebenen einzuhaltenden Fahrplans, dem Ist-Zustand und dem Energieverbrauch des Fahrzeugs (10), Wetterprognosedaten und/oder Ergebnissen von Fahrspielrechnungen für den nächsten Streckenabschnitt.

4. Fahrzeug (10) nach einem der voranstehenden Ansprüche, **dadurch gekennzeichnet, dass** die Prognoseeinrichtung den Fahrenergiewert (dE) berechnet auf der Basis einer von ihr ermittelten Fahrstrategie (FS), die die Fahrweise in dem nächsten Streckenabschnitt festlegt.

5. Fahrzeug nach Anspruch 4,
**dadurch gekennzeichnet, dass** die Prognoseeinrichtung die Fahrstrategie (FS) ermittelt auf der Basis eines vorgegebenen einzuhaltenden Fahrplans, dem Ist-Zustand und dem Energieverbrauch des Fahrzeugs (10), Wetterprognosedaten und/oder Ergebnissen von Fahrspielrechnungen.

6. Fahrzeug (10) nach einem der voranstehenden Ansprüche, **dadurch gekennzeichnet, dass** die Prognoseeinrichtung die Fahrstrategie (FS) ermittelt mit dem Ziel, einen optimalen Ladevorgang, insbesondere energiesparenden, verschleißarmen und/oder lebensdauerschonenden Ladevorgang zu ermöglichen.

7. Fahrzeug (10) nach einem der voranstehenden Ansprüche, **dadurch gekennzeichnet, dass** die Prognoseeinrichtung mit einer Fahrzeugsteuereinrichtung (16) in Verbindung steht oder einen Bestandteil einer Fahrzeugsteuereinrichtung (16) bildet, die das Fahrzeug (10) auf der Basis der von der Prognoseeinrichtung ermittelten Fahrstrategie (FS) steuert.

8. Fahrzeug (10) nach einem der voranstehenden Ansprüche, **dadurch gekennzeichnet, dass** die Prognoseeinrichtung mit einer Fahrzeugassistenzeinrichtung (15) in Verbindung steht oder einen Bestandteil einer Fahrzeugassistenzeinrichtung (15) bildet, die einem Fahrzeugführer des Fahrzeugs (10) auf der Basis der von der Prognoseeinrichtung ermittelten Fahrstrategie (FS) Fahrzeugsteuerdaten akustisch und/oder visuell anzeigt, anhand derer der Fahrzeugführer das Fahrzeug (10) unter Einhaltung der Prognose der Prognoseeinrichtung steuern kann.

9. Fahrzeug nach einem der voranstehenden Ansprüche, **dadurch gekennzeichnet, dass** die Prognoseeinrichtung einen, mehrere oder alle der nachfolgenden Bedingungen, Aspekte, Ziele oder Algorithmen berücksichtigt:
- Fahrplan,
- Streckendaten, insbesondere Daten bezüglich der Elektrifizierung und Einspeiseleistung von Netz und/oder Ladestation, bezüglich Streckengradienten, bezüglich Kurvenradien, bezüglich Haltestellung, bezüglich Kilometrierung, bezüglich Geschwindigkeitsbegrenzungen und/oder bezüglich Streckensignalen,
- Modellierungsparameter des Fahrzeugs, insbesondere die maximale Leistungsaufnahme,
- Modellierung des Energiespeichers,
- Modellierung eines oder mehrerer Zwischenkreise,
- Modellierung des elektrischen Antriebssystems des Fahrzeugs,
- Modellierung von Verlustparametern,
- Ist-Zustand von Fahrzeugkomponenten, insbesondere der Batterie oder Ladezustände,
- Temperaturen,
- Spannungen,
- Ströme,
- Kühlwassertemperatur,
- voraussichtliche Fahrzeit im elektrifizierten Abschnitt,
- Standzeit an Ladestation,
- Traktionsleistung als Funktion der Zeit,
- Traktionsenergieverbrauch,
- HBU/Bordnetz-Verbrauch,
- minimaler Zielladezustand, um den nächsten nicht elektrifizierten Abschnitt zu überwinden (insbesondere aus Reichweitenprognose),
- Optimierungsalgorithmus, der basierend auf der Modellierung von Live-Daten, Rand- und Nebenbedingungen, und Prognosedaten das optimale Ladeprofil gemäß einer Kostenfunktion für die Batterie berechnet.

10. Fahrzeug (10) nach einem der voranstehenden Ansprüche, **dadurch gekennzeichnet, dass**
- das Fahrzeug (10) ein Schienenfahrzeug ist, dem ein Fahrplan vorgegeben ist, der das Befahren des jeweils nächsten Schienenstreckenabschnitts zeitlich festlegt, und
- die Prognoseeinrichtung die Ladestrategie (LST) und die Fahrstrategie (FS) unter Berücksichtigung des einzuhaltenden Fahrplans ermittelt.

11. Fahrzeug (10) nach einem der voranstehenden Ansprüche 1 bis 9,
**dadurch gekennzeichnet, dass** das Fahrzeug (10) ein Bus des öffentlichen Nahverkehrs ist, dem ein Fahrplan vorgegeben ist, der das Befahren des jeweils nächsten Streckenabschnitts zeitlich festlegt, und
die Prognoseeinrichtung die Ladestrategie (LST) und die Fahrstrategie (FS) unter Berücksichtigung des einzuhaltenden Fahrplans ermittelt.

12. Fahrzeug (10) nach einem der voranstehenden Ansprüche, **dadurch gekennzeichnet, dass** die Ladestrategie (LST) derart ermittelt wird, dass der Energiespeicher die Fahrenergie erhält, die zum Durchfahren des nächsten Streckenabschnitts nötig ist, zuzüglich einer Sicherheitsmarge.

13. Fahrzeug (10) nach Anspruch 12,
**dadurch gekennzeichnet, dass** die Sicherheitsmarge maximal 10% des errechneten Fahrenergiewerts (dE) beträgt.

14. Verfahren zum Betreiben eines Fahrzeugs (10), insbesondere Schienenfahrzeugs, das einen Stromabnehmer (11) zur Aufnahme externer elektrischer Energie und einen internen Energiespeicher (12) aufweist, der gespeicherte Energie zum Fahren in nichtelektrifizierten Streckenabschnitten zur Verfügung stellen kann,
**dadurch gekennzeichnet, dass**
- auf der Basis von Streckendaten eines nächsten Streckenabschnitts, der sich bis zu einem nächsten Fahrziel erstreckt, ein Fahrenergiewert (dE) berechnet wird, der die zum Durchfahren eines oder mehrerer nichtelektrifizierter Unterabschnitte des nächsten Streckenabschnitts nötige Fahrenergie angibt, und
- unter Heranziehung des Ladestatus des Energiespeichers (10) vor dem Befahren des Streckenabschnitts und dem Fahrenergiewert (dE) der Prognoseeinrichtung die zu ladende Energiemenge berechnet sowie eine Ladestrategie (LST) ermittelt wird, gemäß derer der Energiespeicher vor dem Befahren des Streckenabschnitts und/oder während des Befahrens des oder der elektrifizierten Unterabschnitte in dem nächsten Streckenabschnitt geladen werden soll, damit der Energiespeicher (10) zum Fahrtbeginn die nötige Fahrenergie oder zumindest die nötige Fahrenergie aufweist.
